# EUROPÄISCHE PATENTSCHRIFT

(11) **EP 2 538 148 B1**
(45) Veröffentlichungstag und Bekanntmachung des Hinweises auf die Patenterteilung: **05.11.2014**
(21) Anmeldenummer: 11005002.8
(22) Anmeldetag: 20.06.2011
(51) Int. Cl.: F24F 3/16, F24F 5/00, F24D 3/16

(54) **Verfahren und Vorrichtung zum Temperieren eines Raumes**
Method and device for tempering an area
Dispositif et procédé destinés à la thermorégulation d'une pièce

(43) Veröffentlichungstag der Anmeldung: 26.12.2012
(73) Patentinhaber: GiB Gesellschaft für innovative Bautechnologie mbH, 94424 Arnstorf (DE)
(72) Erfinder: Weber, Martin, 94424 Arnstorf (DE)
(74) Vertreter: Klingseisen, Franz

(56) Entgegenhaltungen:
- EP-A2- 2 206 970
- DE-A1-102005 015 280
- DE-A1-102009 047 887
- DE-U1-202009 011 329
- US-A1- 2008 127 820

## Beschreibung

Die Erfindung betrifft ein Verfahren und eine Vorrichtung zum Heizen oder Kühlen eines Raumes mittels eines temperierten Wand- oder Deckenelementes, beispielsweise in der Form eines Deckensegels.

DE 10 2009 047 887 A1, von der der Oberbegriff der Ansprüche 1 und 5 ausgeht, beschreibt ein Plattenbauelement, bei dem auf einem Trägerelement beispielsweise in der Form einer Gipskartonplatte Kunststoffrohrleitungen verlegt sind, durch die ein Temperiermedium strömt, wobei die Gipskartonplatte einen unterschiedlichen Aufbau haben kann und die Kunststoffrohrleitung auch in einer Einbettlage des Plattenbauelementes eingebettet sein können

Es ist bekannt, derartige Heiz- und Kühlelemente mit einer gut wärmeleitenden Metallfläche auf der Sichtseite mittels eines Rohrregisters zu kühlen oder zu heizen, welches in wärmeleitendem Kontakt auf der Rückseite der Metallfläche angebracht ist Ein solches Heiz-und Kühlelement kann als Wand und/oder Deckenelement verwendet werden, wobei die Temperierung des Raumes durch Strahlung der beheizten oder gekühlten Metallfläche und durch Konvektion der die Metallflächen umströmenden Raumluft erzielt wird

Bei der erfindungsgemäßen Ausgestaltung wird auf der dem Raum abgewandten Seite des Heiz- bzw. Kühlelementes ein Flüssigkeitsfilm ausgebildet, durch den in der darüber streichenden Luft, insbesondere in der zirkulierenden Raumluft enthaltene Partikel gebunden werden und auf diese Weise die Raumluft gereinigt wird.

Vorzugsweise wird die den Flüssigkeitsfilm bildende Flüssigkeit temperiert, so dass zusätzlich zur Luftreinigungsfunktion auch die temperierfunktion des Heiz- bzw Kühlelementes dadurch verbessert wird, dass die über die Flüssigkeitsschicht streichende Raumluft zusätzlich temperiert wird.

Nach einer bevorzugten weiteren Ausgestaltung wird auf der der Sichtseite des Kühlelementes abgewandten Seite eine gut wärmeleitende Schicht, insbesondere eine Metallschicht vorgesehen, die so gekühlt wird, dass die in der Raumluft enthaltene Feuchtigkeit daran kondensiert, so dass zusätzlich zur Reinigungs- und Kühlfunktion der Raumluft auch Feuchtigkeit entzogen wird. Hierbei wird die als Kondensationseinrichtung ausgebildete Rückseite des Kühlelementes stärker gekühlt als die Sichtseite.

Die Kondensationseinrichtung auf der Rückseite des Kühlelementes kann auch in Form eines unter den Taupunkt gekühlten Flüssigkeitsfilms ausgebildet werden, so dass die in der Raumluft gebundene Luftfeuchtigkeit an dem gekühlten Flüssigkeitsfilm kondensiert. Auf diese Weise kann die Raumluftfeuchte gezielt geregelt werden.

Bei einem solchen Kühlelement mit Kondensatbildung auf der Rückseite wird das Kondensat vorzugsweise über eine semipermeable Fläche, insbesondere eine Membran, in die im Kühlelement zirkulierende Kühlflüssigkeit zurückgeleitet, aus der das Kondensat in einer angeschlossenen Einrichtung wieder entzogen werden kann.

Die Erfindung wird beispielsweise anhand der Zeichnung näher erläutert. Es zeigen
- Fig. 1: in einer schematischen, perspektivischen Ansicht eine Ausführungsform eines Deckensegels mit einer Flüssigkeitsschicht auf der Rückseite,
- Fig. 2: eine Schnittansicht durch ein Deckensegel mit einer wärmeleitenden Schicht auf der Rückseite für die Kondensatbildung,
- Fig. 3: eine schematische Draufsicht auf die Ausführungsform nach Fig. 2,
- Fig. 4: einen Querschnitt entsprechend Fig. 2 mit Einzelheiten des Aufbaus, und
- Fig. 5: eine perspektivischen Ansicht einer Wärmeleitschicht zwischen Kondensatplatte und Temperierplatte.

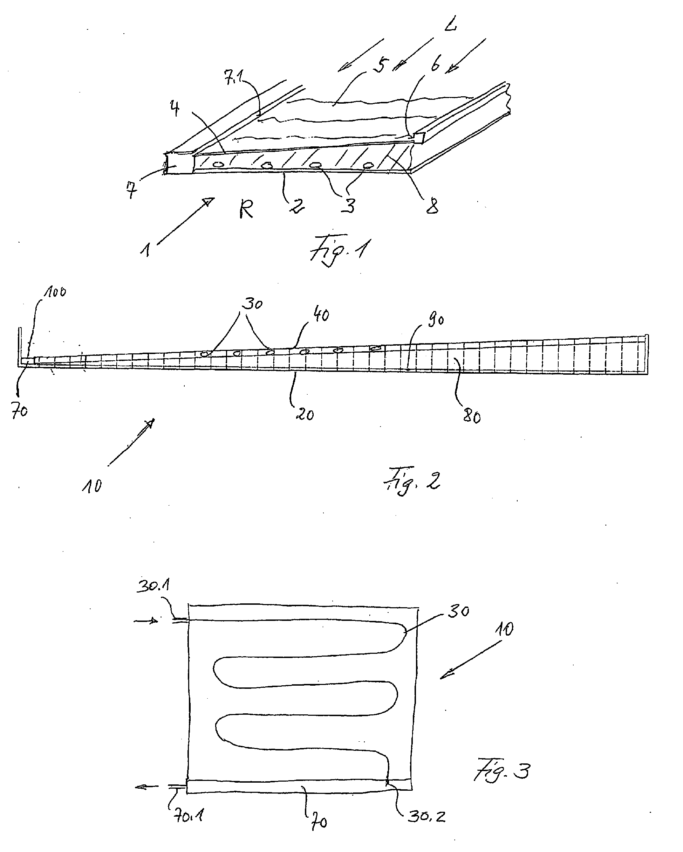

Fig. 1 zeigt ein etwa rechteckiges Heiz- bzw. Kühlelement 1 (im folgenden Temperierelement), das auf der dem Raum R zugewandten Sichtseite z.B. eine durchgehende oder gelochte Metallplatte 2 für die Raumtemperierung aufweist. Es kann auch ein anderes Material für diese Temperierplatte 2 vorgesehen werden, beispielsweise eine Gipskartonplatte. Auf der Rückseite der Metallplatte 2 ist ein von einer Flüssigkeit durchströmtes Rohrregister 3 in wärmeleitender Verbindung mit der Metallplatte 2 angeordnet, durch das die Metallplatte (im folgenden Temperierplatte) auf einer gegenüber der Temperatur der Raumluft niedrigeren oder höheren Temperatur gehalten wird. Über dem Rohrregister 3 ist auf der Rückseite des Temperierelementes 1 eine Fläche 4 ausgebildet, über die ein Flüssigkeitsfilm 5 fließt. Bei dem dargestellten Ausführungsbeispiel eines Deckensegels hat diese Fläche 4 eine Neigung gegenüber der Horizontalen, so dass die auf einer Seite der Fläche 4 durch einen Spalt 6 eines Kanals 6a zugeführte Flüssigkeit über die Fläche 4 fließt und auf der gegenüberliegenden Seite in einem Kanal 7 aufgefangen werden kann.

Der Zwischenraum zwischen der Fläche 4 und der Temperierplatte 2 kann offen ausgebildet sein oder auch mit einer Wärmeleitschicht 8 ausgefüllt sein.

Ein solches Deckensegel 1 wird in einem Abstand von der Decke eines Raumes angeordnet, so dass Raumluft L, wie durch Pfeile in Fig. 1 angedeutet, durch Konvektion und/oder auch durch eine durch ein nicht dargestelltes Lüftungsgerät hervorgerufene Luftströmung über die Flüssigkeitsschicht 5 streichen kann. Hierbei werden in der Raumluft L enthaltene Partikel in der Flüssigkeitsschicht 5 gebunden, so dass das Temperierelement 1 auch eine Luftreinigungsfunktion erfüllt.

Zur Verstärkung der Luftreinigungsfunktion kann dem Flüssigkeitsfilm 5 auch ein Additiv zugemischt werden, durch das Gerüche und Schadstoffe aus der darüber streichenden Luft entfernt werden.

Vorzugsweise wird die Flüssigkeitsschicht 5 gegenüber der Raumluft L gekühlt oder erwärmt, so dass die über die Flüssigkeitsschicht 5 streichende Raumluft L durch diese auch temperiert wird. Hierbei kann die den Flüssigkeitsfilm 5 bildende Flüssigkeit durch das Rohrregister 3 vor dem Austritt aus dem Spalt 6 gekühlt oder erwärmt werden, indem beispielsweise ein Abschnitt des Rohrregisters 3 längs des Zufuhrkanals 6a verläuft. Zusätzlich oder anstelle der direkten Temperierung der Flüssigkeitsschicht 5 kann eine Temperierung der wärmeleitenden Fläche 4 über die Wärmeleitschicht 8 erfolgen, die z.B. aus einer Graphitplatte bzw. Graphitschicht bestehen kann. In diesem Fall wird die Flüssigkeitsschicht 5 indirekt durch das Rohrregister 3 temperiert.

Anstelle der Raumluft L kann auch aus einem anderen Raum oder aus dem Freien zugeführte Luft L über den Flüssigkeitsfilm auf der Rückseite des Temperierelementes geleitet werden, wobei dann die so konditionierte Luft in den darunterliegenden Raum strömt wird.

Bei einer weiteren Ausführungsform kann die Temperierung der dem Raum zugewandten Wärmeleitschicht bzw. Temperierplatte ausschließlich über den temperierten Flüssigkeitsfilm auf der Rückseite des Temperierelementes erfolgen, wobei über die Wärmeleitschicht 8 Wärme transportiert wird, so dass ein Rohrregister 3 zum Heizen oder Kühlen entfallen kann.

Bei einer entsprechend niedrigen Temperatur des Flüssigkeitsfilms 5 kann aus der über den Flüssigkeitsfilm streichenden Luft Feuchtigkeit durch Kondensatbildung entzogen werden, wobei das Kondensat durch den Flüssigkeitsfilm 5 mit abtransportiert wird. Auf diese Weise wird neben der Luftreinigungsfunktion und der Kühlfunktion der Flüssigkeitsschicht 5 auch eine Entfeuchtungsfunktion des Kühlelementes 1 erreicht.

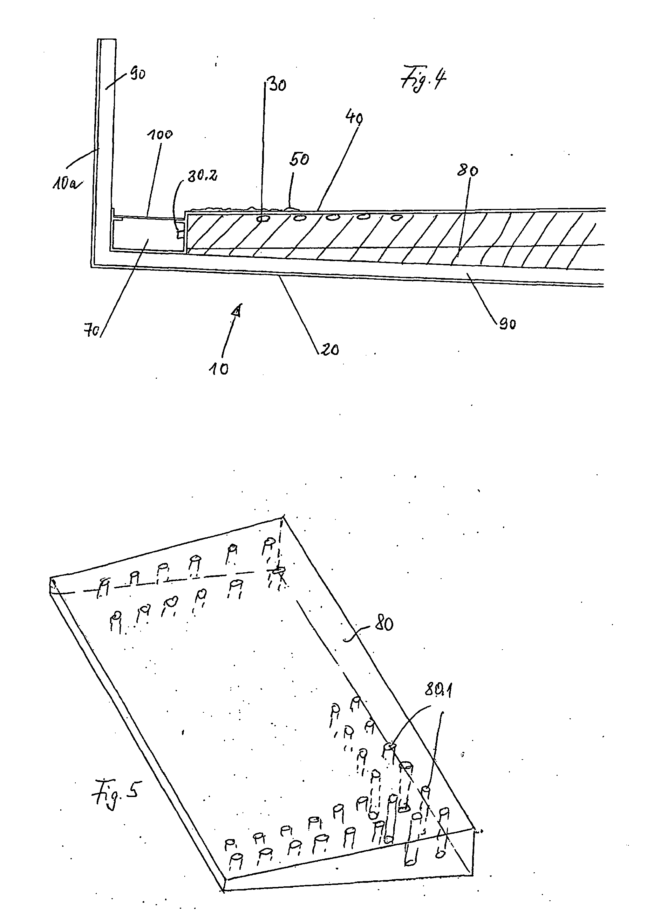

Bei einer bevorzugten Ausführungsform nach Fig. 2 wird anstelle eines gekühlten Flüssigkeitsfilms 5 eine gut wärmeleitende Schicht 40, z.B. eine Metallplatte, auf der Rückseite eines Kühlelementes 10 vorgesehen, die unter den Kondensationspunkt der Luftfeuchtigkeit abgekühlt wird, so dass sich auf dieser Schicht 40 (im Folgenden Kondensatplatte) die in der Raumluft enthaltene Feuchtigkeit als Kondensat niederschlägt. Hierbei wird die Kondensatplatte 40 auf ein niedrigeres Temperaturniveau gekühlt als die Temperierplatte 20 auf der Sichtseite des Kühl- bzw. Temperierelementes 10. Das in Fig. 4 bei 50 angedeutete Kondensat auf der geneigten Kondensatplatte 40 wird über einen Kanal 70 abgeführt, der entsprechend Fig. 3 längs der tiefer liegenden Seite des Kühlelementes 10 verläuft.

Fig. 3 zeigt schematisch eine Draufsicht auf das Kühlelement 10 in Fig. 2, wobei das als Kühlregister dienende Rohrregister 30 bei 30.1 an einen Kühlflüssigkeitskreislauf angeschlossen ist und an einem Auslass 30.2 in den Kanal 70 mündet, aus dem die Kühlflüssigkeit bei 70.1 austritt. Die Ausgestaltung im Bereich des Kanals 70 ist in Fig. 4 deutlicher wiedergegeben. Das Kühlregister 30 kann in verschiedene Weise ausgebildet sein, beispielsweise auch durch senkrecht von der Ober- zur Unterseite in Fig. 3 verlaufende Kanäle.

Bei einer solchen Ausgestaltung nach Fig. 2 bis 4 wird das Rohrregister 30 nicht an der dem Raum zugewandten Kühlplatte 20 angeordnet, sondern direkt an der für die Kondensatbildung auf der Rückseite angeordneten Kondensatplatte 40, um diese maximal zu kühlen. Durch die das Kühlregister 30 durchströmende Kühlflüssigkeit wird die Kondensatplatte 40 beispielsweise unter die Taupunkttemperatur auf ca. 10°C gekühlt, so dass sich auf der Oberseite der Kondensatplatte 40 in der Raumluft von beispielsweise etwa 22°C enthaltene Feuchtigkeit abscheidet.

Um eine Kondensatbildung auf der dem Raum zugewandten Kühlplatte 20 zu verhindern, wird der Aufbau zwischen Kondensatplatte 40 und Kühlplatte 20 so ausgebildet, dass die Kühlplatte 20 jeweils eine höhere Temperatur als die Kondensatplatte 40 hat. Beispielsweise wird der Aufbau zwischen Kondensatplatte 40 und Kühlplatte 20 so ausgebildet, dass sich bei einer Temperatur von etwa 10°C an der Kondensatplatte 40 eine Temperatur von etwa 17°C an der Kühlplatte 20 einstellt, wobei auch die Kühlplatte 20 durch das in einem Abstand von der Kühlplatte 20 angeordnete Kühlregister 30 gekühlt wird. Dadurch, dass das Kühlregister 30 direkt an der Kondensatplatte 40 in wärmeleitendem Kontakt angebracht bzw. in diese integriert ist und sich die Kühlplatte 20 in einem durch ein Wärmeleitmedium 80 überbrückten Abstand von dem Rohrregister 30 angeordnet ist, bildet sich in Abhängigkeit von der Dicke der Wärmeleitschicht 80 und deren Wärmeleitfähigkeit an der Kühlplatte 20 eine höhere Temperatur als an der Kondensatplatte 40 aus. Die Wärmeleitschicht 80 kann auch mehrlagig ausgebildet sein, wie in Fig. 4 angedeutet.

Dies kann durch einen den Wärmetransport reduzierenden Aufbau zwischen Kondensatplatte 40 und Kühlplatte 20 erreicht werden. Bei dem Ausführungsbeispiel der Fig. 2 bis 4 ist zwischen Kondensatplatte 40 und Kühlplatte 20 eine gut wärmeleitende Graphitschicht 80 vorgesehen, durch die die Temperaturen von der Rückseite des Kühlelementes 40 auf die Temperierplatte 20 übertragen werden, wobei aber zwischen Graphitschicht 80 und Kühlplatte 20 eine dünne Isolierschicht 90 vorgesehen ist, durch die der Wärmeübergang von der Graphitschicht 80 auf die Kühlplatte 20 gesteuert reduziert wird.

Die schwache thermisch isolierende bzw. den Wärmeübergang reduzierende Schicht 90 kann beispielsweise aus einem Vlies oder einer dünnen Mineralwolleschicht ausgebildet sein. Sie wird so ausgelegt, dass bei der jeweils vorgesehenen Ausgestaltung der wärmeleitenden Schicht 80, durch die die niedrigen Temperaturen der Kondensatplatte 40 bzw. des Kühlregisters 30 auf die Kühlplatte 20 weitergeleitet werden, an der Kühlplatte 20 einer Erhöhung der Oberflächentemperatur auftritt bzw. die Kühlplatte 20 nicht in dem Maße gekühlt wird wie die Kondensatplatte 40, um eine unerwünschte Tauwasserbildung an der Kühlplatte zuverlässig zu vermeiden.

Insgesamt wird der Zwischenraum zwischen Kondensatplatte 40 und Kühlplatte 20 so ausgebildet, dass sich bei einer Temperatur der Kondensatplatte 40 von beispielsweise 10°C eine Temperatur von etwa 17°C an der Kühlplatte 20 einstellt. Hierbei kann die Wärmeleitschicht 80 so ausgelegt werden, dass keine zusätzliche Isolierschicht 90 erforderlich ist.

Durch die Kondensatbildung auf der Oberfläche der Kondensatplatte 40 wird ebenfalls der oben beschriebene Reinigungseffekt für die darüber streichenden Luft erreicht.

Die Kühlplatte 20 kann eine durchgehende, auch strukturierte Oberfläche aufweisen. Sie kann auch mit Durchbrechungen oder mit einer Lochung versehen sein, um am Deckensegel bzw. am Kühlelement 10 eine Schallabsorption zu erreichen. In einem solchen Fall werden in der Graphitschicht 80 vorzugsweise Hohlräume oder Durchbrechungen 80.1 ausgebildet, die mit einem Schallabsorbierenden Material, insbesondere Mineralwolle, ganz oder teilweise gefüllt sind. Fig. 5 zeigt eine perspektivische Ansicht einer solchen gelochten Graphitplatte 80, die für die geneigte Anordnung der Kondensatplatte 40 etwa eine Keilform hat.

Zum Abführen des Kondensats 50 von der geneigten Kondensatplatte 40 wird vorzugsweise der auf einer Seite des Kühlelementes 10 vorgesehene Kühlflüssigkeitskanal 70 verwendet, dessen Oberseite durch eine druckfeste, semipermeable Fläche, z.B. eine Membran 100 (Fig. 4) abgedeckt ist, durch die das Kondensat 50 in den Kanal 70 eindringt, in dem die Kühlflüssigkeit mit einer höheren Dichte zirkuliert.

Es wird eine Kühlflüssigkeit mit einer höheren physikalischen Dichte als Wasser verwendet, so dass das auf der Kondensatplatte 40 gesammelte Kondenswasser 50 durch die Membran 100 aufgrund seiner geringeren Dichte durch osmotische Wirkung diffundiert und in den Kühlflüssigkeitskreislauf gelangt.

Der mit Kondensat angereicherten Kühlflüssigkeit kann in einem nicht dargestellten Prozess das Kondensatz.B. durch Umkehrosmose oder einen anderen Aufbereitungsprozess entzogen werden, worauf die wieder in ihre Ursprungsdichte versetzte Kühlflüssigkeit wieder in den Kühlkreislauf eingeleitet wird. Das der Kühlflüssigkeit entzogene Kondenswasser kann mittels Kälterückgewinnung energetisch genutzt werden.

Fig. 4 zeigt ein Kühlelement 10 mit einem abgewinkelten Rand 10a der Kühlplatte 20, wobei die Isolierschicht 90 längs des abgewinkelten Randabschnittes 1 0a verläuft, damit die kühlen Bereiche insbesondere des Kanals 70 gegenüber der Umgebung thermisch abgeschirmt sind. In entsprechende Weise verläuft die Isolierschicht 90 auch unter dem Kanal 70 und nicht nur unter der Wärmeleitschicht 80.

Anstelle der beschriebenen Kondensatabführung kann auch eine andere Ausführungsform vorgesehen werden. Beispielsweise kann das Kondensat auch über eine am niedrigen Ende der Kondensatplatte 40 angeordneten Rinne abgeführt und z.B. durch ein separates Rohrnetz abgeleitet werden, ohne dass das Kondensat in den Kühlflüssigkeitskreislauf aufgenommen wird.

Die als Kondensationselement dienende Kondensatplatte 40 kann eine glatte oder strukturierte Oberfläche bzw. Kondensationsfläche aufweisen. Beispielsweise kann die Kondensationsfläche auch quer zur Neigung gewellt ausgebildet sein, um die Oberfläche zu vergrößern. Auch ist es möglich, auf der Kondensationsfläche bzw. Kondensatplatte 40 Rippen vorzusehen, die längs der Neigung verlaufen, wobei sich zwischen den Rippen Kanäle zur Ableitung des Kondensats bilden.

Durch eine entsprechende Regelung der Oberflächentemperatur des Kondensationselementes bzw. der Kondensatplatte 40 im Verhältnis zur relativen Luftfeuchtigkeit der Raumluft L kann eine effiziente und energiesparende Raumluftentfeuchtung und Regulierung vorgenommen werden.

Es sind verschiedene Abwandlungen der beschriebenen Bauformen möglich, wobei Elemente der einen Bauform auch mit Elementen der anderen Bauform kombiniert werden können, ohne dass dies:im Einzelnen beschrieben ist. So kann beispielsweise auch bei der Ausführungsform nach Fig. 1 das Rohrregister 3 an der Platte 4 in wärmeleitendem Kontakt angebracht sein, über die der Flüssigkeitsfilm 5 fließt, insbesondere wenn die Temperatur des Flüssigkeitsfilms 5 derart niedrig ausgelegt wird, dass sich Kondensat aus der Raumluft bildet. Auch bei einer solchen Ausführungsform muss die Wärmeübertragung zwischen Platte 4 und der dem Raum zugewandten Kühlplatte 2 so reduziert werden, dass sich auf der Kühlplatte 2 kein Kondensat bilden kann, beispielsweise durch eine schwache thermische Isolationsschicht zwischen den Platten 4 und 2.

Es ist auch möglich, bei einem Aufbau nach den Fig. 2 bis 4 zusätzlich auf der Rückseite der Temperierschicht bzw. -platte 20 ein Register 3 vorzusehen, damit das Kühlelement 10 auch als Temperierelement 1 entsprechend Fig. 1 verwendet werden kann, wenn beispielsweise eine Kondensatbildung auf der Kondensatplatte 40 nicht vorgesehen ist. Hierdurch wird das Temperierelement 10 vielseitiger einsetzbar.

Insbesondere bei einer solchen Ausgestaltung kann anstelle eines Rohrregisters 3 auch eine andere Heiz- bzw. Kühleinrichtung vorgesehen werden, beispielsweise in der Form einer elektrischen Heizeinrichtung.

Anstelle einer Metallplatte für die Kühlplatte 2, 20 einerseits und die Platte 4 bzw. die Kondensatplatte 40 andererseits kann jeweils auch eine gut wärmeleitende Schicht in Form einer Metallfolie oder einer Graphitschicht oder auch eine Schicht aus einem anderen wärmeleitenden Material vorgesehen sein.

Als Kondensiereinrichtung kann anstelle der Kondensatplatte 40 auch eine Reihe von flachen Leitungen für die Kühlflüssigkeit vorgesehen werden, die von der hohen Seite ausgehend von dem Zufuhrkanal 6a in Fig. 1 entlang der Neigung in den Kühlflüssigkeitskanal 70 verlaufen. Dabei können diese flachen Kühlflüssigkeitsleitungen etwa plattenförmig ausgebildet sein und auf der Köndensatseite mit Rippen oder Wellungen versehen werden. Diese flachen Flüssigkeitsleitungen können anstelle des Kühlregisters 30 vorgesehen werden, wobei sie direkt auf der Wärmeleitschicht 80 aufliegen, um auch die Kühlplatte 20 in reduziertem Maße zu kühlen.

Es kann eine nicht dargestellte Regeleinrichtung vorgesehen werden, um in Abhängigkeit von der Luftfeuchtigkeit der Raumluft und deren Temperatur die Temperatur der Kühlflüssigkeit bzw. des Kondensationselementes 40 zu steuern, um die Raumluftfeuchtigkeit und die Raumlufttemperatur auf vorgegebenen Werten zu halten.

Die Kühlplatte 20 der Ausführungsform von Fig. 2 bis 4 kann anstelle von Metall auch aus einem anderen wärmeleitenden Material bestehen und insbesondere auch als Gipskartonplatte ausgebildet sein. Dies gilt auch für die Ausführungsform nach Fig. 1.

Ein Kühlelement der beschriebenen Art kann nicht nur als Wandelement oder Deckensegel verwendet werden, es kann auch als Funktionselement nicht sichtbar hinter einer konvektionsoffenen Verkleidung eingebaut werden. Weiterhin ist es möglich, bei der Verwendung äls Deckensegel Lichtsysteme und andere Einbauten wie Brandmelder, Präsenzmelder oder dgl. in das Kühlelement zu integrieren.

Das beschriebene Kühlelement 10 bzw. ein Temperaturelement 1 kann nicht nur als Deckensegel und Wandelement verwendet werden, sondern auch für geschlossene Decken- und Wandaufbauten, wobei zwischen dem Hohlraum auf der Rückseite des Kühl- bzw. Temperierelementes und dem zu temperierenden Raum eine Verbindung in Form von Öffnungen oder Durchbrechungen vorhanden ist, durch die die über die Rückseite des Temperierelementes strömende Luft in den zu temperierenden Raum geleitet werden kann. Bei einem Aufbau mit weitgehend geschlossener Decke kann vorzugsweise ein Lüftungsgerät vorgesehen werden, um die in dem Hohlraum über der Decke enthaltene Luft in Richtung auf die Austrittsöffnungen in den darunterliegenden Raum zu bewegen.

Insgesamt kann durch ein Kühlelement 10 nach den Fig. 2 bis 5 erreicht werden, dass keine i weiteren Luftentfeuchtungsanlagen für die Klimatisierung eines Raumes erforderlich sind. Durch niedrige Kühlflüssigkeitstemperatur können sehr geringe Rohrquerschnitte verwendet werden, durch die Vorteile im Aufbau des Kühlflüssigkeitsnetzes erzielbar sind, weil von einer zentralen Versorgungsquelle für Kühlflüssigkeit diese direkt in die beschriebenen Temperierelemente 10 eingeleitet werden kann.

## Patentansprüche

1. Verfahren zum Temperieren eines Raumes mittels eines Temperierelementes (1; 10), das eine dem Raum zugewandte, gut wärmeleitende Fläche (2; 20) aufweist, die durch eine Temperiereinrichtung (3; 30) temperiert wird, **gekennzeichnet durch** die Schritte des
- Ausbildens einer Flüssigkeitsfilms (5; 50) auf der Rückseite des Temperierelementes (1; 10), und
- des Anordnens des Temperierelementes derart, dass Luft über die Flüssigkeitsschicht strömen kann, die dem zu temperierenden Raum (R) zugeführt wird

2. Verfahren nach Anspruch 1, wobei die Flüssigkeitsschicht (5) gekühlt oder beheizt wird.

3. Verfahren nach Anspruch 1, wobei die Rückseite des als Kühlelement dienenden Temperierelementes (10) unter den Kondensationspunkt abgekühlt wird, so dass die in der Raumluft oder in der darüber streichenden Luft enthaltene Feuchtigkeit auf der Rückseite des Kühlelementes (10) kondensiert, und
wobei die Vorderseite (20) des Kühlelementes auf einer Temperatur über dem Kondensationspunkt der Luftfeuchtigkeit gehalten wird.

4. Verfahren nach Anspruch 3, wobei das auf der Rückseite des Kühlelementes (10) gebildete Kondensat (50) über eine semipermeable Fläche (100) in den Kühlflüssigkeitskreislauf (70) abgeführt wird.

5. Vorrichtung zum Temperieren eines Raumes mittels eines Temperierelementes (1; 10), das
eine dem Raum (R) zugewandte Temperier fläche (2; 20) aufweist, **gekennzeichnet durch**
eine auf der dem Raum abgewandten Rückseite des Temperierelementes ausgebildete Flüssigkeitsschicht (5; 50)

6. Vorrichtung nach Anspruch 5, wobei die Flüssigkeitsschicht (5) auf der Rückseite des Temperierelementes (1) zwischen einer Flüssigkeitszufuhr (6) und einem Auffangkanal (7) längs einer geneigten Fläche (4) ausgebildet wird.

7. Vorrichtung nach Anspruch 5 oder 6, wobei auf der Rückseite der Temperierfläche (2) eine Temperiereinrichtung (3) in wärmeleitendem Kontakt angeordnet ist.

8. Vorrichtung nach Anspruch 7, wobei die die Flüssigkeitsschicht (5) bildende Flüssigkeit durch die Temperiereinrichtung (3) temperiert wird.

9. Vorrichtung nach Anspruch 5, wobei auf der Rückseite des als Kühlelement dienenden Temperierelementes (10) eine Kondensiereinrichtung (40) ausgebildet ist, die derart gekühlt wird, dass sich Kondensat aus der in der darüber streichenden Luft enthaltenen Luftfeuchtigkeit auf der Kondensiereinrichtung bildet, und die Temperatur der dem Raum (R) zugewandten Kühlplatte (20) höher eingestellt wird als die der Kondensiereinrichtung (40).

10. Vorrichtung nach Anspruch 9, wobei an der Kondensiereinrichtung in Form einer Kondensatplatte (40) ein Rohrregister (30) in wärmeleitendem Kontakt angebracht oder in dieser integriert ist und zwischen Kondensatplatte (40) und Kühlplatte (20) ein wärmeübertragender Aufbau vorgesehen ist, durch den die Kühlplatte (20) auf einer höheren Temperatur gehalten wird als die Kondensatplatte (40).

11. Vorrichtung nach Anspruch 10, wobei zwischen Kondensatplatte (40) und Temperierplatte (20) eine gut wärmeleitende Schicht (80) vorgesehen ist, die über eine thermisch isolierende Isolierschicht (90) auf der Temperierplatte (20) aufliegt.

12. Vorrichtung nach einem der Ansprüche 9 bis 11, wobei das an der Kondensiereinrichtung, bzw. Kondensatplatte (40) abfließende Kondensat (50) über eine semipermeable Fläche (100) in den Kühlflüssigkeitskreislauf (70) osmotisch diffundiert, in dem eine Kühlflüssigkeit höherer Dichte als die des Kondensats zirkuliert.

## Claims

1. Method for regulating the temperature of a room by means of a temperature-regulating element (1; 10), having a very heat-conductive surface (2; 20) which faces the room and is heated by a temperature-regulating device (3; 30),
**characterised by** the steps of
- forming a liquid film (5; 50) on the rear side of the temperature-regulating element (1; 10), and
- arranging the temperature-regulating element such that air can flow over the liquid layer which is supplied to the temperature-regulated room (R).

2. Method according to claim 1, wherein the liquid layer (5) is cooled or heated.

3. Method according to claim 1, wherein the rear side of the temperature-regulating element (10) serving as a cooling element is cooled below the condensation point so that the moisture contained in the ambient air or in the air passing thereabove is condensed on the rear side of the cooling element (10), and
wherein the front side (20) of the cooling element is maintained at a temperature above the condensation point of the air moisture.

4. A method according to claim 3, wherein the condensate (50) on the rear side of the cooling element (10) is discharged via a semi-permeable surface (100) into the coolant circuit (70).

5. Apparatus for regulating the temperature of a room by means of a temperature-regulating element (1; 10) which has a temperature-regulating surface (2; 20) facing the room (R), **characterised by**
a liquid layer (5; 50) formed on the rear side of the temperature-regulating element facing away from the room.

6. Apparatus according to claim 5, wherein the liquid layer (5) on the rear side of the temperature-regulating element (1) is formed between a liquid supply (6) and a collecting duct (7), along an inclined surface (4).

7. Apparatus according to claim 5 or 6, wherein a temperature-regulating device (3) is arranged in heat-conducting contact on the rear side of the temperature-regulating surface (2).

8. Apparatus according to claim 7, wherein the liquid forming the liquid layer (5) is temperature-regulated by the temperature-regulating device (3).

9. Apparatus according to claim 5, wherein on the rear side of the temperature-regulating element (10) serving as a cooling element, a condenser (40) is formed which is cooled so that condensate from the air moisture contained in the air passing thereover is formed on the condenser, and the temperature of the cooling plate (20) facing the room (R) is set higher than that of the condenser (40).

10. Apparatus according to claim 9, wherein tubes (30) are mounted on the condenser in the form of a condensation plate (40) in thermally conductive contact with or integrated in this, and a heat-transfer structure is provided between the condensation plate (40) and cooling plate (20), by means of which the cooling plate (20) is maintained at a higher temperature than the condensation plate (40).

11. Apparatus according to claim 10, wherein between the condensation plate (40) and temperature-regulating plate (20) a very heat-conducting layer (80) is provided, which abuts at the temperature-regulating plate (20) via a thermally-insulating insulation layer (90).

12. Apparatus according to one of claims 9 to 11, wherein the condensate (50) flowing off at the condenser or condensation plate (40) osmotically diffuses via a semi-permeable surface (100) into the coolant circuit (70), in which a cooling fluid of higher density than that of the condensate circulates.

## Revendications

1. Procédé pour régler la température d'une pièce au moyen d'un élément régulateur de température (1; 10), comprenant une surface bonne conductrice de la chaleur (2; 20) faisant face à la pièce et dont la température est réglée par un dispositif régulateur de température (3, 30), **caractérisé par** les étapes consistant à
- former un film liquide (5; 50) au côté arrière de l'élément régulateur de température (1, 10), et
- disposer l'élément régulateur de température de sorte que l'air peut circuler pardessus la couche de liquide, qui est introduit dans la pièce à température réglée (R).

2. Procédé selon la revendication 1, dans lequel la couche de liquide (5) est refroidie ou chauffée.

3. Procédé selon la revendication 1, dans lequel le côté arrière de l'élément régulateur de température (10) servant d'élément de refroidissement est refroidi en dessous du point de condensation de façon que l'humidité contenue dans l'air ambiant ou dans l'air passant au-dessus est condensée au côté arrière de l'élément de refroidissement (10), et
dans lequel le côté avant (20) de l'élément de refroidissement est maintenu à une température supérieure au point de condensation de l'humidité de l'air.

4. Procédé selon la revendication 3, dans lequel le condensat (50) formé au côté arrière de l'élément de refroidissement (10) est déchargé à travers une surface semi-perméable (100) dans le circuit de liquide de refroidissement (70).

5. Dispositif pour régler la température d'une pièce au moyen d'un élément régulateur de température (1; 10), comprenant une surface régulateur de température (2; 20) faisant face à la pièce (R), **caractérisé par**
une couche de liquide (5; 50) formée sur le côté arrière de l'élément régulateur de température tourné à l'opposé de la pièce.

6. Dispositif selon la revendication 5, dans lequel la couche de liquide (5) au côté arrière de l'élément régulateur de température (1) est formée entre une alimentation en liquide (6) et un canal collecteur (7) le long d'une surface inclinée (4).

7. Dispositif selon l'une des revendications 5 ou 6, dans lequel un dispositif régulateur de température (3) est disposé en contact de conduction thermique sur le côté arrière de la surface régulateur de température (2).

8. Dispositif selon la revendication 7, dans lequel le liquide qui forme la couche de liquide (5) est régulé à l'égard de sa température par le dispositif régulateur de température (3).

9. Dispositif selon la revendication 5, dans lequel au côté arrière de l'élément régulateur de température (10) servant d'élément de refroidissement est formé un dispositif de condensation (40), qui est refroidi de sorte que du condensat de l'humidité de l'air contenue dans l'air passant au-dessus est formé sur le dispositif de condensation, et la température de la plaque de refroidissement (20) faisant face à la pièce (R) est réglée plus élevée que celle du dispositif de condensation (40).

10. Dispositif selon la revendication 9, dans lequel des tubes (30) sont montés sur le dispositif de condensation en forme d'une plaque de condensation (40) en contact thermiquement conducteur avec ou intégré dans celle-ci, et entre la plaque de condensation (40) et la plaque de refroidissement (20) une structure de transfert de chaleur est fournie, par laquelle la plaque de refroidissement (20) est maintenue à une température plus élevée que la plaque de condensation (40).

11. Dispositif selon la revendication 10, dans lequel entre la plaque de condensation (40) et la plaque régulateur de température (20), une couche bonne conductrice de chaleur (80) est fournie, qui prend appui sur la plaque régulateur de température (20) à travers d'une couche isolante de manière isolant thermique (90).

12. Dispositif selon l'une des revendications 9 à 11, dans lequel le condensat (50) s'écoulant sur le dispositif de condensation ou sur la plaque de condensation (40) diffuse de manière osmotique à travers d'une surface semi-perméable (100) dans le circuit de liquide de refroidissement (70), dans lequel circule un fluide de refroidissement ayant une densité supérieure à celle du condensat.
